# EUROPÄISCHE PATENTSCHRIFT

(11) **EP 0 757 420 B1**
(45) Veröffentlichungstag und Bekanntmachung des Hinweises auf die Patenterteilung: **15.11.2000**
(21) Anmeldenummer: 95112318.1
(22) Anmeldetag: 04.08.1995
(51) Int. Cl.: H02H 9/00

(54) **Elektronisches Vorschaltgerät mit Einschaltstrombegrenzung und/oder Überspannungsschutz**
Electric ballast with inrush current limitation and overvoltage protection
Ballast électronique avec limitation du courant d'appel et protection contre les surtensions

(43) Veröffentlichungstag der Anmeldung: 05.02.1997
(73) Patentinhaber: SIEMENS AKTIENGESELLSCHAFT, 80333 München (DE)
(72) Erfinder: Krummel, Peter, D-83301 Traunreut (DE)

(56) Entgegenhaltungen:
- EP-A- 0 423 885
- WO-A-95/05696
- DE-A- 3 402 222

## Beschreibung

Die Erfindung bezieht sich auf ein elektronisches Vorschaltgerät mit Einschaltstrombegrenzung und/oder Überspannungsschutz.

Elektronische Vorschaltgeräte der eingangs genannten Art sind beispielsweise aus EP-B1-0 395 776 oder auch aus DE-C2-41 00 349 bekannt. Wegen der gleichartigen Funktion und einer Reihe von Betriebsparametern, die sich aus den Eigenschaften der mit diesen elektronischen Vorschaltgeräten betriebenen Leuchtstofflampen einerseits, aber auch Vorschriften zum Standard der elektronischen Vorschaltgeräte ergeben, sind die bekannten elektronischen Vorschaltgeräte in ihrem grundsätzlichen Schaltungsaufbau einander sehr ähnlich. So wird ein elektronisches Vorschaltgerät an das Wechselstromnetz häufig über ein Oberwellenfilter angeschlossen, das Rückwirkungen auf das öffentliche Netz in weitem Umfang eliminiert. Der Ausgang des Oberwellenfilters ist mit einer Gleichrichteranordnung, meist einem Vollweggleichrichter verbunden, mit dessen gelieferter Gleichspannung die übrigen Baueinheiten des elektronischen Vorschaltgeräts versorgt werden. An die Gleichspannungsanschlüsse dieser Gleichrichteranordnung ist ein Hochsetzsteller angeschlossen, mit dem die von der Gleichrichteranordnung gelieferte pulsierende Gleichspannung in eine hochgesetzte, geregelte Gleichspannung, häufig als Zwischenkreisspannung bezeichnet, umgesetzt wird. Dabei kann beispielsweise ein als Elektrolytkondensator ausgebildeter Speicher- bzw. Stützkondensator verwendet werden. Mit der geregelten Zwischenkreisspannung wird ein Wechselrichter versorgt, der mit Hilfe einer Halbbrückenanordnung, d. h. zweier in Reihe liegender, alternativ aktivierter Halbleiterschalter die gelieferte Gleichspannung in eine hochfrequente Rechteckimpulsfolge umsetzt, mit der der Lampenlastkreis, in dem mindestens eine Leuchtstofflampe angeordnet ist, betrieben wird.

Eine Besonderheit, auf die im vorliegenden Fall hinzuweisen ist, besteht bei vielen bekannten elektronischen Vorschaltgeräten darin, diese der Gleichrichteranordnung nachgeschalteten Einheiten des elektronischen Vorschaltgerätes an interne Gerätemasse anzuschließen und darüber alle zur Gleichrichteranordnung zurückfuhrenden Strompfade zu führen, indem man den auf niedrigem Potential liegenden Gleichstromanschluß der Gleichrichteranordnung schließlich auch mit dieser internen Gerätemasse verbindet.

Darüber hinaus ist aus DE-C2-41 00 349 noch bekannt, daß es z. B. vielfach üblich ist, ein flackerfreies und sicheres Zünden der betriebenen Leuchtstofflampe durch Vorheizen ihrer als Heizwendeln ausgestalteten Elektroden zu erreichen. Dabei wird die Vorheizphase durch ein Zeitglied begrenzt, das einen im Lampenlastkreis liegenden Schalter steuert. Aus dem genannten Stand der Technik ist es insbesondere bekannt, dafür einen bipolaren Transistor in Form eines sogenannten IGBT (Insulated Gate Bipolar Transistor) zu verwenden, der einen hochohmigen Gate-Anschluß aufweist, einen außerordentlich hohen Sperrwiderstand besitzt und praktisch leistungslos anzusteuern ist.

Die bekannten Vorschaltgeräte können als induktive oder auch kapazitive Vorschaltgeräte ausgebildet sein, in jedem Fall stellen sie - vereinfacht betrachtet - im wesentlichen einen an die Gleichrichteranordnung angeschlossenen Blindwiderstand dar. Daraus ergibt sich, daß übliche elektronische Vorschaltgeräte beim Einschalten meist einen hohen Anlaufstrom aufnehmen, bevor sie in einen stationären Betrieb übergehen. Dies erfordert es, mit elektronischen Vorschaltgeräten betriebene Beleuchtungsanlagen ausreichend abzusichern, was insbesondere bei größeren Beleuchtungsanlagen einen entsprechenden Aufwand bedeutet.

Andererseits sind elektronische Vorschaltgeräte relativ empfindlich gegenüber Netzschwankungen, besonders kritisch sind dabei kurze, jedoch energiereiche Überspannungsimpulse, die trotz entsprechender Schutzmaßnahmen eines das Netz betreibenden Elektroversorgungsunternehmens auftreten können. Auch in diesem Zusammenhang spielt wieder eine Rolle, daß elektronische Vorschaltgeräte vereinfacht als Blindwiderstände aufzufassen sind, die auf derartige Überspannungen entsprechend reagieren. Aus Gründen der Betriebssicherheit wird daher bei bekannten elektronischen Vorschaltgeräten einiger Aufwand getrieben, sie überspannungssicher auszubilden.

Auf der anderen Seite zwingt der auf dem Markt für elektronische Vorschaltgeräte entstandene harte Wettbewerb den Hersteller solcher Geräte dazu, diese trotz aller kritischen Einflußfaktoren unter Einsparung von Bauelementen möglichst einfach zu realisieren und dabei bevorzugt preiswerte Bauelemente einzusetzen. Seriöse Hersteller achten dabei allerdings streng darauf, daß dieses Bestreben nicht zu Lasten der Funktionstüchtigkeit und Betriebssicherheit der elektronischen Vorschaltgeräte geht.

Im folgenden gewürdigter Stand der Technik bezieht sich zwar nicht unmittelbar auf elektronische Vorschaltgeräte und deren besondere Eigenschaften, ist jedoch im Hinblick auf Gleichstromversorgungen von Interesse.

Aus EP-A1-0 423 885 ist ferner eine Stromversorgungseinrichtung mit einer zwischen einer eingangsseitigen Versorgungsspannung und einem ausgangsseitigen Speicherkondensator liegenden Einschaltstrombegrenzungsschaltung bekannt. Diese besitzt einen ersten Halbleiterschalter, dessen Schaltstrecke in einer Rückleitung zur eingangsseitigen Versorgungsspannung angeordnet ist, parallel zu dessen Schaltstraße ein Parallelwiderstand und parallel zu dessen Steuerstrecke die Parallelschaltung aus einem ersten Kondensator und einem ersten Widerstand sowie die Schaltstrecke eines zweiten Halbleiterschalters angeordnet ist. Bei dieser bekannten Stromversorgungseinrichtung ist die Einschaltstrombegrenzungsschaltung so ausgebildet, daß sie eine geringe Verlustleistung aufweist und auch bei häufig und schnell auftretenden Aussetzern der Versorgungsspannung verzögerungsfrei wieder wirksam wird. Dazu ist die Steuerelektrode des zweiten Halbleiterschalters an den Abgriff eines ersten Spannungsteilers angeschlossen, dem ein zweiter Kondensator parallel liegt. Parallel zur Steuerstrecke des zweiten Halbleiterschalters liegt die Schaltstrecke eines dritten Halbleiterschalters, der in Abhängigkeit eines von einer Schwellwertschaltung gelieferten Steuerstromes beim Unterschreiten eines Schwellwertes der Versorgungsspannung gesperrt wird.

Die aus EP-A1-0 423 885 bekannte Schaltung ist nicht als Stromversorgung für Anwendungsfälle ausgelegt, wie sie spezifisch bei einem elektronischen Vorschaltgerät vorliegen. Sie lehrt auch nur, mittels eines in dem Rückleitungszweig zur Gleichrichteranordnung angeordneten Halbleiterschalters sowie eines zu dessen Schaltstrecke parallel geschalteten Widerstandes ein 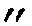 weiches" Einschalten zu realisieren. Ferner wird die Einschaltstrombegrenzung bei Netzspannungsunterbrechungen (Aussetzern) in den definierten Anfangszustand zurückgesetzt, um einem danach zu erwartenden, erneuten 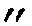 harten" Stromanstieg zu begegnen. Die bekannte Schaltung ist nicht dafür bestimmt und geeignet, Überspannungsimpulse zu detektieren und Maßnahmen zu treffen, daß diese an die Gleichrichteranordnung angeschlossene Einheiten nicht überlasten.

Weiterhin ist aus DE-A-3 402 222 eine Schaltungsanordnung zum Begrenzen von Überspannungen in Gleichstrom-Bordnetzen mit zwei Stromversorgungsleitungen bekannt. In eine der beiden Versorgungsleitungen ist ein steuerbarer Schalter, beispielsweise ein Transistor, eingefügt. Ein Komparator ist mit einem Eingang über eine Konstantspannungsquelle mit der dem steuerbaren Schalter zugeordneten Versorgungsleitung auf dessen Ausgangsseite verbunden, mit einem zweiten Eingang an die zweite Versorgungsleitung angeschlossen. Der Komparator dient dazu, Überspannungen auf den Versorgungsleitungen zu detektieren, um gegebenenfalls den steuerbaren Schalter zu öffnen und damit ein versorgtes Gerät von der Betriebsspannung zu trennen. Ist der steuerbare Schalter als Transistor ausgebildet, kann ein Kondensator in dessen Basis-Emitter-zweig vorgesehen sein, um den über einen Basiswiderstand an die auf hohem Potential liegende Versorgungsspannung angeschlossenen Schaltertransistor verzögert einzuschalten und damit einen Einschaltstromstoß zu begrenzen. Dieser Stand der Technik belegt frühere Versuche, bei an eine Gleichstromversorgung angeschlossenen Geräten hohe Belastungen beim Einschalten sowie auch beim Auftreten von Überspannungen zu vermeiden. Eine detaillierte Lösung, die strengen Anforderungen der Praxis genügt, ist damit jedoch nicht offenbart.

Der vorliegenden Erfindung liegt daher die Aufgabe zugrunde, bei einem Vorschaltgerät der eingangs genannten Art mit Hilfe einer möglichst einfachen, durch preiswerte Bauelemente zu realisierenden, demnach kostengünstigen Schaltungsanordnung eine Begrenzung des Einschaltstromes zu erzielen und/oder das elektronische Vorschaltgerät gegenüber aus dem Netz stammende Überspannungsspitzen zu schützen.

Bei einem erfindungsgemäßen elektronischen Vorschaltgerät wird diese Aufgabe durch die im Patentanspruch 1 beschriebenen Merkmale gelöst.

Durch die erfindungsgemäße Lösung ist eine Schaltungsanordnung geschaffen, die es erlaubt, die beiden vorgenannten Anforderungen in einer Doppelfunktion zu erfüllen. Ein entsprechend der erfindungsgemäßen Lösung ausgebildetes elektronisches Vorschaltgerät hat für den Nutzer den großen Vorteil, daß damit nun nicht mehr, wie bei bekannten elektronischen Vorschaltgeraten üblich, die Zahl der an einem Leistungsnetzschalter betreibbaren Geräte durch den beim gleichzeitigen Einschalten der im Stromkreis liegenden elektronischen Vorschaltgeräte entstehenden Stromstoß vorgegeben ist, sondern im wesentlichen durch den im Dauerbetrieb aufgenommenen Strom bestimmt werden kann. Für den Nutzer ist dies ein großer Vorteil, denn damit kann er handelsübliche N-Sicherungsautomaten nahezu bis zu ihrem Nennstrom belasten. Näherungsweise läßt sich in einem Stromkreis etwa die doppelte Anzahl der bei üblicher Bemessung betreibbaren elektronischen Vorschaltgeräte absichern.

Andererseits bietet die sich selbst rücksetzende Schutzschaltung einen sicheren Schutz des elektronischen Vorschaltgerätes selbst gegen hohe Überspannungsimpulse, was insbesondere darauf zurückzufuhren ist, daß alle der Gleichrichteranordnung nachgeschalteten Baueinheiten des elektronischen Vorschaltgerätes im gesperrten Zustand des Halbleiterschalters durch dessen außerordentlich hohen Sperrwiderstand geschützt sind. Daß sich dies durch relativ kostengünstige Halbleiterbauelemente realisieren läßt, ist ein besonderer Vorteil der erfindungsgemäßen Lösung. Er gibt nämlich damit dem Entwickler von elektronischen Vorschaltgeräten die Möglichkeit, die kritischen Bauelemente in den an die Gleichrichteranordnung angeschlossenen Baueinheiten des elektronischen Vorschaltgerätes ebenfalls kostengünstiger zu dimensionieren, gegebenenfalls auch Schaltungsvereinfachungen durchzuführen, ohne daß die Funktionstüchtigkeit und Betriebssicherheit des elektronischen Vorschaltgerätes darunter leidet.

Ausführungsbeispiele der Erfindung werden im folgenden anhand der Zeichnung näher erläutert. Dabei zeigt:
Figur 1 ein schematisches Blockschaltbild für ein elektronisches Vorschaltgerät mit seinen an sich bekannten Baueinheiten,
Figur 2 eine erste Ausführungsform für eine Strombegrenzungs- und Überspannungsschutzschaltung für ein solches elektronisches Vorschaltgerät gemäß Figur 1 und
Figur 3 eine weitere Ausführungsform einer erfindungsgemäßen Strombegrenzungs- und Überspannungsschutzschaltung.

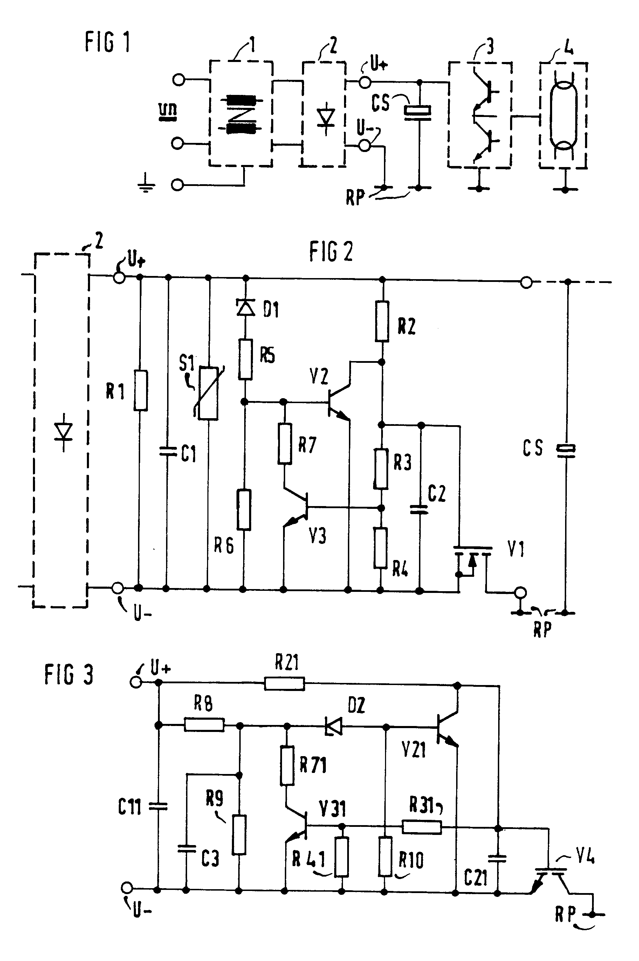

In Figur 1 ist nur zur Verdeutlichung und zur Klarstellung der Zusammenhänge schematisch in einem Blockschaltbild der grundsätzliche und an sich bekannte Aufbau für ein elektronisches Vorschaltgerät wiedergegeben. An Netzwechselspannung un liegt als Eingangsschaltung des elektronischen Vorschaltgerätes ein Oberwellenfilter 1, das dazu dient, die durch die Schaltvorgänge im elektronischen Vorschaltgerät entstehenden Störspannungen zu begrenzen, um unerwünschte Netzrückwirkungen zu vermeiden. Am Ausgang des Oberwellenfilters 1 ist eine Gleichrichteranordnung 2 vorgesehen, üblicherweise als Gleichrichterbrücke ausgebildet, um eine Vollweggleichrichtung der Netzwechselspannung un zu realisieren. Die Gleichrichteranordnung 2 besitzt zwei Gleichspannungsausgänge die auf hohem Gleichstrompotential U+ bzw. auf niedrigem Gleichstrompotential U- liegen. Bedingt durch die Sinusform des Netzstromes ist eine zeitlich konstante Leistungsaufnahme des elektronischen Vorschaltgerätes aus dem Wechselstromnetz nicht möglich. Deshalb besitzen die elektronischen Vorschaltgeräte einen Energiespeicher als Puffer für die gepulste gleichgerichtete Netzwechselspannung. Üblicherweise wird dafür ein Speicherkondensator CS eingesetzt, dem das hohe Gleichstrompotential U+ zugeführt wird. Bei elektronischen Vorschaltgeräten wird einiger Aufwand getrieben, die sich so am Speicherkondensator CS ergebende Gleichspannung, häufig als Zwischenkreisspannung bezeichnet, konstant zu halten. Bei einer Netzwechselspannung un von etwa 230 V liegt diese Zwischenkreisspannung - je nach Ausführungsform des elektronischen Vorschaltgerätes - etwa in dem Bereich von 300 V bis 400 V. Die vom Speicherkondensator CS gelieferte Zwischenkreisspannung bildet die Betriebsspannung für einen angeschlossenen Wechselrichter 3, der diese in eine hochfrequente Rechteckimpulsfolge umformt. Mit dieser hochfrequenten Rechteckimpulsfolge wird schließlich ein an den Wechselrichter 3 angeschlossener Lastkreis 4 mit mindestens einer zu betreibenden Leuchstofflampe gespeist.

Für das Verständnis der nachfolgenden Beschreibung sei darauf hingewiesen, daß es bei elektronischen Vorschaltgeräten üblich ist, die im Stromlauf hinter der Gleichrichteranordnung 2 liegenden Schaltungsteile des elektronischen Vorschaltgerätes auf eine Bezugsmasse, eben die interne Gerätemasse des elektronischen Vorschaltgerätes zu legen. Diese ist in Figur 1 durch das Bezugszeichen RP verdeutlicht; womit angedeutet ist, daß die hinter der Gleichrichteranordnung 2 liegenden Geräteteile auf ein gemeinsames Referenzpotential gelegt sind. Über diese interne Gerätemasse werden die verschiedenen Stromkreise im elektronischen Vorschaltgerät geschlossene, weshalb auch der das niedrige Gleichstrompotential U- führende Ausgang der Gleichrichteranordnung 2 als Rückflußverbindung auf dieses Referenzpotential RP gelegt ist.

Von einem modernen elektronischen Vorschaltgerät wird vom Benutzer nicht nur ein ungestörter, möglichst wartungsfreier Lampenbetrieb erwartet. Damit sich die Investition lohnt, sollen elektronische Vorschaltgeräte bei langer Lebensdauer betriebssicher, das heißt unempfindlich gegen Störungen im Wechselstromnetz sein und sich als Verbraucher möglichst günstig in elektrische Anlagen integrieren lassen. Davon ausgehend ist Gegenstand der vorliegenden Erfindung eine Strombegrenzungs- und/oder Überspannungsschutzschaltung für ein elektronisches Vorschaltgerät.

In Figur 2 ist eine erste Ausführungsform einer derartigen Schaltungsanordnung, an den Ausgängen der Gleichrichteranordnung 2 liegend, in ein elektronisches Vorschaltgerät gemäß Figur 1 eingefügt und im einzelnen dargestellt. Die unmittelbar an die Ausgänge der Gleichrichteranordnung 2 zwischen dem hohen und dem niedrigen Gleichstrompotential U+ bzw. U- angeschlossene Schaltungsanordnung weist diesen Ausgängen parallel liegend einen ersten Kondensator C1 sowie einen ersten ohmschen Widerstand R1 auf, die als Stabilisierungskondensator bzw. als Entladewiderstand für diesen Kondensator wirken. Weiterhin parallel dazu liegt ein Spannungsteiler, gebildet aus einem hochohmigen Widerstand R2, der in Serie mit zwei dazu relativ niedrigohmigen weiteren ohmschen Widerständen R3 und R4 angeordnet ist. Diesen beiden ohmschen Widerständen R3 und R4 ist ein weiterer Kondensator C2 parallel geschaltet. Dieser weitere Kondensator C2 liegt im Ansteuerkreis eines Leistungstransistors V1, der im Ausführungsbeispiel als selbstsperrender MOS-Feldeffekttransistor ausgebildet ist. Der Drainanschluß dieses Leistungstransistors ist auf das Referenzpotential RP des elektronischen Vorschaltgerätes gelegt, während der Sourceanschluß an den auf niedrigem Gleichstrompotential U- liegenden Ausgang der Gleichrichteranordnung 2 angeschlossen ist. Der Gateanschluß dieses Leistungstransistors V1 ist an den Verbindungspunkt des hochohmigen Widerstandes R2 mit den zu diesem in Serie liegenden weiteren ohmschen Widerständen R3 und R4 angeschlossen. Damit liegt die Parallelschaltung dieser weiteren Widerstände R3, R4 sowie des zweiten Kondensators C2 parallel zu dem Gateanschluß und dem Sourceanschluß dieses Leistungstransistors V1.

Dieser Parallelschaltung der weiteren ohmschen Widerstände R3, R4 sowie des zweiten Kondensators C2 ist außerdem die Schaltstrecke eines ersten bipolaren Transistors V2 parallel geschaltet. Die Basis dieses ersten bipolaren Transistors V2 ist mit einem weiteren Spannungsteiler verbunden, der aus einer zwischen den beiden Ausgängen der Gleichrichteranordnung 2 angeordneten Serienschaltung einer Z-Diode D1 sowie zweier weiterer ohmscher Widerstände R5 bzw. R6 besteht, wobei die Basis des ersten bipolaren Transistors V2 an den Verbindungspunkt dieser beiden weiteren Widerstände R5 und R6 angeschlossen ist.

Als weiteres Schaltelement ist ein zweiter bipolarer Transistor V3 vorgesehen, dessen Emitter auf das niedrige Gleichstrompotential U- gelegt ist und dessen Kollektor über einen Kollektorwiderstand R7 an die Basisansteuerung des ersten bipolaren Transistors V1 angeschlossen ist. Die Basis dieses zweiten bipolaren Transistors schließlich ist mit dem Verbindungspunkt der beiden ohmschen Widerständen R3, R4 des erstgenannten Spannungsteilers verbunden. Schließlich ist in diesem Ausführungsbeispiel ein Varistor S1 parallel zu den beiden Ausgängen mit hohem bzw. niedrigen Gleichstrompotential U+, U- der Gleichrichteranordnung angeschlossen.

Die anhand von Figur 2 vorstehend erläuterte Schaltungsanordnung hat eine mehrfache Funktion. Sie dient zunächst der Strombegrenzung beim Einschalten des elektronischen Vorschaltgerätes. Solange das elektronische Vorschaltgerät nicht an das Netz gelegt ist, das heißt die Netzwechselspannung un = 0 ist, liefert die Gleichrichteranordnung 2 demzufolge auch keine Gleichspannung. In diesem Zustand sind die beiden Kondensatoren C1 und C2 entladen, weil eine beim Abschalten des elektronischen Vorschaltgerätes vorhandene Ladung über die jeweils den Kondensatoren parallel liegenden ohmschen Widerstände R1 bzw. R3, R4 abgeführt wird. Infolgedessen ist auch der Leistungstransistor V1 gesperrt, weil seine Gate-Source-Spannung = 0 ist. Damit ist der der beschriebenen Schaltungsanordnung nachgeschaltete Speicherkondensator CS zusammen mit den im Stromlauf folgenden Teilen des elektronischen Vorschaltgerätes, dem Wechselrichter 3 und dem Lampenstromkreis 4, eindeutig von der Gleichrichteranordnung 2 abgetrennt, das heißt diese Teile des elektronischen Vorschaltgerätes stellen sich hochohmig dar, wobei der Eingangswiderstand im wesentlichen durch den Sperrwiderstand der Drain-Source-Strecke des Leistungstransistors V1 mitbestimmt ist. Ein eindeutiger Schaltungszustand vor Inbetriebnahme des elektronischen Vorschaltgerätes ist damit definiert festgelegt.

Wird nun das elektronische Vorschaltgerät ans Netz gelegt, so bildet sich an den beiden Ausgängen der Gleichrichteranordnung 2 die gleichgerichtete Netzspannung aus, wobei bei einer Netzwechselspannung un von ca. 230 V das hohe Gleichstrompotential U+ im Vergleich zu dem niedrigen Gleichstrompotential U- einen Wert von ca. 310 V betragt. Diese Spannung liegt unterhalb der häufig als Z-Spannung bezeichneten Durchbruchspannung der Z-Diode D1, so daß im zugehörigen Spannungsteiler D1, R5, R6 kein Strom fließt. Anders ist dies bei dem ersten, aus dem hochohmigen Widerstand R2 und den weiteren Widerständen R3, R4 gebildeten Spannungsteiler. Über den hochohmigen Widerstand R2, beispielsweise mit einem Widerstandswert in der Größenordnung mehrerer MΩ wird der zweite Kondensator C2 langsam aufgeladen. Damit steigt die Gate-Source-Spannung des Leistungstransistors V1 entsprechend mit einer vorgegebenen Hysterese gegenüber dem Anschalten des elektronischen Vorschaltgerätes an Netzwechselspannung un entsprechend an. Wird infolge der fortschreitenden Aufladung des zweiten Kondensators C2 schließlich die Schwellenspannung des Leistungstransistors V1 überschritten, so geht dieser in den leitenden Zustand über. Dabei nimmt der Sperrwiderstand des Leistungstransistors V1 zunächst langsam, mit zunehmender Gate-Source-Spannung mit steigender Rate ab und ist bei einer definierten Gate-Source-Spannung voll durchgeschaltet.

Aufgrund des Schaltverhaltens des Leistungstransistors V1 beginnt eine Ladungsphase des Speicherkondensators CS gegenüber dem Anschaltpunkt an das Netz verzögert und insbesondere wird der Einschaltstrom über den zunächst langsam anwachsenden Drainstrom des Leistungstransistors V1 begrenzt. Die Höhe des zulässigen Stromimpulses läßt sich mit einer entsprechenden Dimensionierung des hochohmigen Widerstandes R2 sowie des zweiten Kondensators C2 einstellen. Damit ist es möglich, den Einschaltstrom auf einen Wert zu begrenzen, der beispielsweise das ein- bis fünffache des Netzscheitelstromes im stationären Betrieb des elektronischen Vorschaltgerätes beträgt. Aufgrund dieser definierten Begrenzung des Einschaltstromes ist es sogar bei größeren Beleuchtungsanlagen unter anderem möglich, auch die elektrische Absicherung der Beleuchtungsanlage entsprechend zu planen, d. h. die Zahl der notwendigen Sicherungsautomaten zu reduzieren, weil diese aufgrund der Unterdrückung kritischer Einschaltstromimpulse praktisch bis zu ihrem Nennstrom belastbar sind und dehalb nur geringere Sicherheitsreserven vorgesehen werden müssen als bei ungeschützten elektronischen Vorschaltgeräten.

Weiterhin ist die Schaltung so ausgelegt, daß der Leistungstransistor V1 mit dem Beginn der Ladephase des Speicherkondensators CS während des Normalbetriebes des elektronischen Vorschaltgerätes sicher geöffnet bleibt. Mit einer entsprechenden Dimensionierung des zugeordneten Spannungsteilers, bestehend aus dem hochohmigen Widerstand R2 sowie den weiteren ohmschen Widerständen R3, R4, hat man es in der Hand, die Betriebsspannung am Gate des Leistungstransistors V1 hoch genug einzustellen, damit sie sicher so weit über der Schwellenspannung liegt, daß der Leistungstransistor V1 im normalen Brennbetrieb voll durchgeschaltet bleibt.

Die in ihrer Funktion bisher noch nicht erläuterten bipolaren Transistoren V2 und V3 bilden, in Kombination mit ihren Ansteuernetzwerken, eine Kippstufe mit Hysterese, mit der eine weitere Funktion der in Figur 2 dargestellten Schaltungsanordnung erfüllt wird. Dieser Schaltungsteil dient dem Schutz des elektronischen Vorschaltgerätes vor über das Netz eingespeisten Überspannungen. Im normalen Brennbetrieb ist der zweite bipolare Transistor V3 ebenso wie der erste Leistungstransistor V1 leitend, da er analog zum ersten Leistungstransistor V1 angesteuert wird. Über seinen relativ niedrigohmigen Kollektorwiderstand R7 hält der zweite bipolare Transistor V3 die Basis des ersten bipolaren Transistors V1 sicher auf niedrigem Potential, so daß dieser erste bipolare Transistor V2 im normalen Brennbetrieb des elektronischen Vorschaltgerätes definiert gesperrt ist.

Übersteigt aber der Momentanwert der über die Gleichrichteranordnung 2 gleichgerichteten Netzwechselspannung eine vorgegebenen, noch als zulässig erachteten Wert für eine Überspannung der Netzwechselspannung un, so soll das elektronische Vorschaltgerät abschalten. Bei Überschreiten der vorgegebenen zulässigen Überspannung wird die Auslöseschwelle des ersten bipolaren Transistors V2 erreicht, die über die Dimensionierung des aus der Z-Diode D1 und den Widerständen R5 und R6 gebildeten Spannungsteilers eingestellt ist. Der leitend geschaltete erste bipolare Transistor V2 entlädt sofort den zweiten Kondensator C2, so daß sowohl der Leistungstransistor V1 als auch der zweite bipolare Transistor V3 schnell gesperrt werden. Mit dem Abschalten des Leistungstransistors V1 geht sein Drainstrom auf Null zurück und das elektronische Vorschaltgerät stellt sich, wie vor dem Anschalten, wieder hochohmig dar. Es besitzt die volle Spannungsfestigkeit der Drain-Source-Strecke des Leistungstransistors V1, die entsprechend hoch gewählt ist. Damit ist das elektronische Vorschaltgerät abgeschaltet und die Lampen der angeschlossenen Lampenstromkreise erlöschen. Dieser Zustand bleibt erhalten, bis die Überspannung abklingt.

Sollte es sich dabei um lang anhaltende oder kriechende Überspannungen aufgrund von Falschverdrahtungen bzw. Leitungsfehlern im Wechselstromnetz handeln, so reicht die über eine entsprechende Typenauswahl des Leistungstransistors V1 erzielte Spannungsfestigkeit des elektronischen Vorschaltgerätes sicher aus, um es zeitlich unbegrenzt und ohne Lebensdauereinbuße sicher zu schützen.

Zum Beherrschen kurzzeitiger, impulsartig im Wechselstromnetz auftretender Überspannungen kann es zweckmäßig sein, sehr hohe Überspannungsimpulse zusätzlich abzuleiten, für diese Fälle ist als weitere Schutzmaßnahme der Varistor S1 vorgesehen, der in diesem Falle kurzzeitig leitend wird und den hohen Stromimpuls ableitet. Bei impulsartig auftretenden Überspannungen klingt die Überspannung relativ schnell wieder ab. In diesem Fall setzt sich die aus den bipolaren Transistoren V2 und V3 gebildete Schutzschaltung automatisch, das heißt ohne Netzunterbrechung zurück. Diese Rücksetzschwelle ist durch die Z-Spannung der ersten Z-Diode D1 sowie die die angeschlossenen Widerstände R5 bzw. R6 bestimmt.Dabei ist der der Kollektor-Emitter-Strecke des zweiten bipolaren Transistors V3 parallel liegende Widerstand R6 wesentlich hochohmiger als der Kollektorwiderstand R7 des zweiten bipolaren Transistors V3. Man kann beispielsweise diesen aus der Z-Diode D1 und den Widerständen R5 und R6 gebildeten Spannungsteiler so ausbilden, daß die statische Einschaltschwelle des ersten bipolaren Transistors V2 bei etwa 295 Veff liegt. Stellt man die Hysterese der aus den beiden bipolaren Transistoren V2 und V3 gebildeten Kippstufe auf etwa 10 Veff ein, so wird diese Schutzschaltung gegen Überspannungen bei Netzspannungen von < 285 V rückgesetzt.

Mit dem bei Abklingen der Überspannung und dem auf diese Weise automatisch durchgeführten Rücksetzen der Schutzschaltung wird der erste bipolare Transistor V2 deaktiviert, so daß nun wieder der bereits beschriebene strombegrenzte Anschaltvorgang des elektronischen Vorschaltgerätes ablaufen kann. Dabei lädt sich der zweite Kondensator C2 zunächst langsam wieder auf und bestimmt über seinen Ladungszustand, wann sowohl der Leistungstransistor V1 als auch der zweite bipolare Transistor V3 wieder eingeschaltet werden und damit der Normalbetrieb des elektronischen Vorschaltgerätes wieder erreicht ist.

In Figur 3 ist eine weitere Ausführungsform für eine den Einschaltstrom begrenzende und das elektronische Vorschaltgerät gegen Überspannungen schützende Schaltungsanordnung dargestellt, deren Grundfunktion der vorstehend anhand von Figur 2 beschriebenen Schaltungsanordnung weitgehend entspricht. Um diesen funktionellen Zusammenhang auch in der Darstellung von Figur 3 zu verdeutlichen, sind funktional durchaus vergleichbare, gegebenenfalls analog dimensionierte Schaltelemente durch eine zusätzliche Ziffer im Bezugszeichen gekennzeichnet. In der Schaltungsanordnung gemäß Figur 3 ist der als MOS-Feldeffekttransistor ausgebildete Leistungstransistor V1 durch einen bipolaren Leistungstransistor V4 bei grundsätzlich gleicher Funktion ersetzt. Dieser bipolare Leistungstransistor ist vorzugsweise als sogenannter IGBT (Insulated Gate Bipolar Transistor) ausgebildet. Bei ansonsten gleichartiger Funktion hat dieser Typ eines bipolaren Leistungstransistors im vorliegenden Anwendungsfall den Vorteil, daß sein Einschaltwiderstand geringer ist. Darüber hinaus läßt sich bei diesem Halbleiterelement mit geringerem Aufwand eine höhere Spannungsfestigkeit erreichen, die im vorliegenden Fall - wie beschrieben - von besonderer Bedeutung ist. Bei vergleichbarer Spannungsfestigkeit ist der bipolare Leistungstransistor V4 vom Typ IGBT kostengünstiger als ein entsprechender selbstsperrender MOS-Feldeffekttransistor des ersten Ausführungsbeispiels. Im übrigen ist das Ansteuernetzwerk für diesen bipolaren Leistungstransistor V4 durchaus vergleichbar dem des Leistungstransistors V1 im Ausführungsbeispiel gemäß Figur 2. Deshalb ist der entsprechende Spannungsteiler, gebildet aus den Widerständen R21, R31 und R41 analog den Widerständen R2, R3 bzw. R4 des entsprechenden Spannungsteilers nach Figur 2 bezeichnet. Gleiches gilt für den die Gatespannung auch am bipolaren Leistungstransistor V4 erzeugenden zweiten Kondensator, hier mit C21 bezeichnet. Damit ist die Funktion des bipolaren Leistungstransistors V4 der des Leistungstransistors V1 im ersten Ausführungsbeispiel völlig entsprechend, so daß sich hier Wiederholungen erübrigen.

Auch im Ausführungsbeispiel gemäß Figur 3 ist mit den beiden bipolaren Transistoren V21 und V31 eine entsprechende Kippstufe mit Hysterese gebildet. Lediglich das Ansteuernetzwerk für den im Falle von auftretenden Überspannungen leitend zu schaltenden bipolaren Transistor V21 ist geringfügig abgewandelt. Infolge der schaltungstechnischen Ausgestaltung des ersten Ausführungsbeispieles ist für die dort verwendete erste Z-Diode D1 eine hohe Durchbruchspannung erforderlich. Bei der im Ausführungsbeispiel gemäß Figur 3 eingesetzten, weiteren Z-Diode D2 wird dagegen nur eine wesentlich geringere Durchbruchspannung benötigt, weshalb diese ebenfalls kostengünstiger ist. Der im ersten Ausführungsbeispiel aus der Z-Diode D1 sowie den Widerständen R5 und R6 gebildete Spannungsteiler ist im Ausführungsbeispiel gemäß Figur 3 durch einen relativ hochohmigen Spannungsteiler, gebildet aus zwei weiteren Widerständen R8 und R9, ersetzt. Der Verbindungspunkt dieser beiden weiteren Widerstände R8 und R9 ist über die weitere, als Kleinsignaldiode ausgebildete Z-Diode D2 an die Basis des einen bipolaren Transistors V21 der Schutzschaltung angeschlossen, die über einen weiteren Widerstand R10 auf das niedrige Gleichstrompotential U- gelegt ist. An den Verbindungspunkten der beiden Widerstände R8 und R9 ist außerdem ein andererseits auf das niedrige Gleichstrompotential U- gelegter weiterer Kondensator C3 angeschlossen. Dieser ermöglicht in Verbindung mit dem Widerstand R8 ein Tiefpaßverhalten an diesem Verbindungspunkt.

Die beschriebenen Ausführungsbeispiele lassen die Möglichkeit zu, die als Ansteuernetzwerk für den Leistungsschalter V1 bzw. V4 ausgebildeten Schaltungsteile zum Begrenzen des Einschaltstromes sowie zum Schutz des elektronischen Vorschaltgerätes gegen Überspannungen im speisenden Wechselstromnetz mit dem Leistungsschalter V1 bzw. V4 selbst als einen integrierten Schaltkreis zu realisieren. Da die einem solchen Schaltkreis zuzuführenden Potentiale U+, U- mit den Ausgangspotentialen der Gleichrichteranordnung 2 identisch sind, ist es ohne Potentialumsetzung, damit besonders einfach möglich, auch letztere in den integrierten Schaltkreis einzubeziehen.

## Patentansprüche

1. Elektronisches Vorschaltgerät mit folgenden Merkmalen:
- es ist eine an Netzwechselspannung (un) anschaltbare Gleichrichteranordnung (2) vorgesehen, die zwei Gleichspannungsanschlüsse mit hohem und niedrigem Gleichspannungspotential (U+ bzw. U-) aufweist,
- eine Rückleitung (RP) aller Strompfade von an die Gleichspannungsanschlüsse der Gleichrichteranordnung angeschlossenen Einheiten (CS, 3, 4) des elektronischen Vorschaltgerätes an den auf niedrigem Gleichspannungspotential (U-) liegenden Gleichspannungsanschluß ist lediglich über die Schaltstrecke eines Halbleiterschalters (V1 bzw. V4) geführt, der damit im gesperrten Zustand den Eingangswiderstand der an die Gleichrichteranordnung (2) angeschlossenen Einheiten (CS, 3, 4) des elektronischen Vorschaltgerätes bestimmt,
- dem Halbleiterschalter ist eine von der Gleichrichteranordnung gespeiste, verzögert wirksame Ansteuerschaltung zugeordnet, die aus einem RC-Glied besteht, in dem eine Reihenschaltung eines hochohmigen Widerstandes (R2 bzw. R21) mit einem ersten Kondensator (C2 bzw. C21) den Gleichspannungsanschlüssen der Gleichrichteranordnung (2) parallel liegend angeordnet ist, wobei der Verbindungspunkt dieser Reihenschaltung mit dem Steuereingang des Halbleiterschalters (V1 bzw. V4) verbunden ist und
- als Schutzschaltung gegen Überspannungen ist eine das hohe Gleichspannungspotential (U+) bewertende Schwellwertschaltung vorgesehen, die als Kippstufe (V2, D1, R5, R6 und V3, R7 bzw. V21, R8, D2, R10 und V31, R71) mit Hysterese ausgebildet ist, die mit einem Eingangsnetzwerk (D1, R5, R6 bzw. R8, D2, R10) parallel an beide Gleichspannungsanschlüsse angeschlossen und ausgangsseitig mit der Ansteuerschaltung des Halbleiterschalters zum Entladen des ersten Kondensators verbunden ist, solange und nur solange ein vorgegebener oberer Gleichapannungsschwellwert detektiert wird und die sich bei Detektion eines vorgegebenen unteren Gleichspannungsschwellwertes selbst in ihren Ausgangszustand zurücksetzt.

2. Elektronisches Vorschaltgerät nach Anspruch 1, **dadurch gekennzeichnet,** daß der Halbleiterschalter als FET-Leistungstransistor (V1) ausgebildet ist.

3. Elektronisches Vorschaltgerät nach Anspruch 1, **dadurch gekennzeichnet,** daß der Halbleiterschalter als IGBT-Transistor (V4) ausgebildet ist.

4. Elektronisches Vorschaltgerät nach einem der Ansprüche 1 bis 3, **dadurch gekennzeichnet,** daß die Ansteuerschaltung (R2, R3, R4, C2 bzw. R21, C21, R31, R41) des Halbleiterschalters (V1 bzw. V4) eine dem ersten Kondensator (C2) parallel liegende Reihenschaltung zweier weiterer ohmscher Widerstände (R3, R4 bzw. R31, R41) aufweist und daß die als Kippstufe mit Hysterese ausgebildete Schwellwertschaltung (V2, D1, R5, R6 und V3, R7 bzw. V21, R8, D2, R10 und V31, R71) einen mit seinem Steuereingang an den Verbindungspunkt dieser weiteren Widerstände (R3, R4 bzw. R31, R41) angeschlossenen bipolaren Transistor (V3 bzw. V31) sowie einen weiteren bipolaren Transistor (V2 bzw. V21) umfaßt, dessen Schaltstrecke parallel zum ersten Kondensator (C2 bzw. C21) gelegt ist und dessen Steuereingang über die Schaltstrecke des einen bipolaren Transistors (V3 bzw. V31) einerseits an den das niedrige Gleichspannungspotential (U-) führenden Gleichspannungsausgang der Gleichrichteranordnung (2) angekoppelt und in dessen Ansteuerzweig, der andererseits an den das hohe Gleichspannungspotential (U+) führenden Gleichspannungsausgang der Gleichrichteranordnung angeschlossen ist, eine Z-Diode (D1 bzw D2), in Sperrichtung geschaltet, angeordnet ist, deren Durchbruchspannung dem vorgegebenen Gleichspannungsschwellwert entsprechend gewählt ist.

5. Elektronisches Vorschaltgerät nach Anspruch 4**, dadurch gekennzeichnet,** daß die Z-Diode (D1) im Ansteuerkreis des weiteren bipolaren Transistors (V2) mit zwei weiteren ohmschen Widerständen (R5, R6) in Reihe liegend angeordnet ist und diese Reihenschaltung den Gleichspannungsanschlüssen der Gleichrichteranordnung (2) parallel geschaltet ist und und daß der Verbindungspunkt dieser weiteren ohmschen Widerstände (R5, R6) mit dem Steuereingang des weiteren bipolaren Transistors (V2) verbunden ist, der andererseits über die Schaltstrecke des einen bipolaren Transistors (V2) an den das niedrige Gleichspannungspotential (U-)führenden Gleichspannungsanschluß der Gleichrichteranordnung (2) angeschlossen ist.

6. Elektronisches Vorschaltgerät nach Anspruch 4, **dadurch gekennzeichnet,** daß parallel zu den Gleichspannungsanschlüssen der Gleichrichteranordnung (2) eine Reihenschaltung zweier weiterer ohmscher Widerstände (R8, R9) angeordnet ist, deren Verbindungspunkt einerseits über die Schaltstrecke des einen bipolaren Transistors (V31) an den das niedrige Gleichspannungspotential (U-) führenden Gleichspannungsanschluß der Gleichrichteranordnung (2) angeschlossen ist und andererseits über die in Sperrichtung betriebene Z-Diode (D2) mit dem Steuereingang des weiteren bipolaren Transistors (V31) verbunden ist.

7. Elektronisches Vorschaltgerät nach Anspruch 6, **dadurch gekennzeichnet,** daß der Verbindungspunkt dieser weiteren ohmschen Widerstände (R8, R9) über einen weiteren Kondensator (C3) an den das niedrige Gleichspannungspotential (U-) führenden Gleichspannungsanschluß der Gleichrichteranordnung (2) angeschlossen ist.

8. Elektronisches Vorschaltgerät nach einem der Ansprüche 1 bis 7, **dadurch gekennzeichnet,** daß den Gleichspannungsanschlüssen der Gleichrichteranordnung (2) parallel liegend ein weiterer Kondensator (C1 bzw. C11) vorgesehen ist.

9. Elektronisches Vorschaltgerät nach einem der Ansprüche 1 bis 8, **dadurch gekennzeichnet,** daß den Gleichspannungsanschlüssen der Gleichrichteranordnung (2) parallel liegend ferner ein Varistor (S1) vorgesehen ist.

10. Elektronisches Vorschaltgerät nach einem der Ansprüche 1 bis 9, **dadurch gekennzeichnet,** daß der Leistungsschalter (V1 bzw. V4) zusammen mit dem ihm zugeordneten, als Strombegrenzungs- bzw. Überspannungsschutzschaltung ausgebildeten Ansteuernetzwerk als integrierter Schaltkreis ausgebildet ist.

11. Elektronisches Vorschaltgerät nach Anspruch 10, **dadurch gekennzeichnet,** daß der integrierte Schaltkreis außerdem die Gleichrichteranordnung (2) umfaßt.

## Claims

1. Electronic ballast having the following features:
- a rectifier arrangement (2) is provided, which can be connected to AC mains voltage (un) and has two DC voltage terminals with a high and a low DC voltage potential (U+ and U-), respectively,
- a return line (RP) of all the current paths of units (CS, 3, 4) of the electronic ballast which are connected to the DC voltage terminals of the rectifier arrangement to the DC voltage terminal which is at the low DC voltage potential (U-) is passed merely via the switching path of a semiconductor switch (V1,V4 or respectively), which, in the off state, thus determines the input resistance of the units (CS, 3, 4) of the electronic ballast which are connected to the rectifier arrangement (2),
- the semiconductor switch is assigned a drive circuit which is fed by the rectifier arrangement, is active in a delayed manner and comprises an RC element in which a series circuit formed by a high-value resistor (R2 or R21, respectively) and a first capacitor (C2 or C21, respectively) is arranged in parallel with the DC voltage terminals of the rectifier arrangement (2), the junction point of this series circuit being connected to the control input of the semiconductor switch (V1 or V4, respectively), and
- as a protective circuit against overvoltages, provision is made of a threshold value circuit which evaluates the high DC voltage potential (U+), which is designed as a multivibrator (V2, D1, R5, R6 and V3, R7 or V21, R8, D2, R10 and V31, R71, respectively) with hysteresis, which is connected with an input network (D1, R5, R6 or R8, D2, R10, respectively), in parallel, to both DC voltage terminals and, on the output side, is connected to the drive circuit of the semiconductor switch for the purpose of discharging the first capacitor, as long as, and only as long as, a predetermined upper DC voltage threshold value is detected, and which resets itself in its starting state when a predetermined lower DC voltage threshold value is detected.

2. Electronic ballast according to Claim 1, characterized in that the semiconductor switch is designed as a FET power transistor (V1).

3. Electronic ballast according to Claim 1, characterized in that the semiconductor switch is designed as an IGBT transistor (V4).

4. Electronic ballast according to one of Claims 1 to 3, characterized in that the drive circuit (R2, R3, R4, C2 or R21, C21, R31, R41, respectively) of the semiconductor switch (V1 or V4, respectively) has a series circuit formed by two further non-reactive resistors (R3, R4 or R31, R41, respectively) which is connected in parallel with the first capacitor (C2), and in that the threshold value circuit (V2, D1, R5, R6 and V3, R7 or V21, R8, D2, R10 and V31, R71, respectively) designed as a multivibrator with hysteresis comprises a transship transistor (V3 or V31, respectively), which is connected by its control input to the junction point between the said further resistors (R3, R4 or R31, R41, respectively), and also a further transship transistor (V2 or V21, respectively), whose switching path is connected in parallel with the first capacitor (C2 or C21, respectively) and whose control input is coupled via the switching path of the first transship transistor (V3 or V31, respectively) on the one hand to that DC voltage output of the rectifier arrangement (2) which carries the low DC voltage potential (U-), and in whose driving path, which is on the other hand connected to that DC voltage output of the rectifier arrangement which carries the high DC voltage potential (U+), there is arranged zener diode (D1 or D2, respectively), connected in the reverse direction, whose breakdown voltage is chosen to correspond to the predetermined DC voltage threshold value.

5. Electronic ballast according to Claim 4, characterized in that the zener diode (D1) in the driving circuit of the further transship transistor (V2) is arranged in series with two further non-reactive resistors (R5, R6), and this series circuit is connected in parallel with the DC voltage terminals of the rectifier arrangement (2), and in that the junction point between these further non-reactive resistors (R5, R6) is connected to the control input of the further transship transistor (V2), which is on the other hand connected via the switching path of the first bipolar transistor (V3) to that DC voltage terminal of the rectifier arrangement (2) which carries the low DC voltage potential (U-).

6. Electronic ballast according to Claim 4, characterized in that a series circuit formed by two further non-reactive resistors (R8, R9) is arranged in parallel with the DC voltage terminals of the rectifier arrangement (2), the junction point between which resistors is on the one hand connected via the switching path of the first transship transistor (V31) to that DC voltage terminal of the rectifier arrangement (2) which carries the low DC voltage potential (U-), and is on the other hand connected via the zener diode (D2), operated in the reverse direction, to the control input of the further transship transistor (V21).

7. Electronic ballast according to Claim 6, characterized in that the junction point between the said further non-reactive resistors (R8, R9) is connected via a further capacitor (C3) to that DC voltage terminal of the rectifier arrangement (2) which carries the low DC voltage potential (U-).

8. Electronic ballast according to one of Claims 1 to 7, characterized in that a further capacitor (C1 or C11, respectively) is provided such that it is connected in parallel with the DC voltage terminals of the rectifier arrangement (2).

9. Electronic ballast according to one of Claims 1 to 8, characterized in that a varistor (S1) is furthermore provided such that it is connected in parallel with the DC voltage terminals of the rectifier arrangement (2).

10. Electronic ballast according to one of Claims 1 to 9, characterized in that the power switch (V1 or V4, respectively), together with the drive network which is assigned to it and designed as a current limiting and/or overvoltage protection circuit, is designed as an integiated circuit.

11. Electronic ballast according to Claim 10, characterized in that the integrated circuit additionally comprises the rectifier arrangement (2).

## Revendications

1. Ballast électronique possédant les caractéristiques suivantes :
- on prévoit un dispositif redresseur (2) pouvant être branché sur la tension alternative de réseau (un), et pourvu de deux bornes de tension continue à potentiel de tension continue haut et bas (U+ resp. U-),
- un circuit de retour (RP) de tous les trajets de courant d'unités (CS, 3, 4) du ballast électronique connectées aux bornes de tension continue du dispositif redresseur ramenant à la borne de tension continue qui se trouve au potentiel de tension continue bas (U-) passe simplement par la longueur de coupure d'un interrupteur à semi-conducteur (V1 resp. V4) qui détermine ainsi, à l'état bloqué, la résistance d'entrée des unités (CS, 3, 4) du ballast électronique connectées au dispositif redresseur (2),
- à l'interrupteur à semi-conducteur est associé un circuit de commande à action retardée alimenté par le dispositif redresseur, qui est formé par un circuit RC dans lequel un montage en série d'une résistance à valeur ohmique élevée (R2 resp. R21) et d'un premier condensateur (C2 resp. C21) est branché an parallèle avec les bornes de tension continue du dispositif redresseur (2), le point de jonction de ce montage an série étant relié à l'entrée de commande de l'interrupteur à semi-conducteur (V1 resp. V4), et
- on prévoit an tant que circuit de protection contre les surtensions, un circuit de seuil évaluant le potentiel de tension continue haut (U+) qui est exécuté en tant que bascule (V2, D1, R5, R6 et V3, R7 resp. V21, R8, D2, R10 et V31, R71) avec hystérèse, connectée à un réseau d'entrée (D1, R5, R6 resp. R8, D2, R10) parallèlement aux deux bornes de tension continue et reliée, sur le côté de sortie, au circuit de commande de l'interrupteur à semi-conducteur en vue de décharger le premier condensateur, aussi longtemps et seulement aussi longtemps qu'une valeur seuil de tension continue supérieure prédéfinie est détectée, et qui se remet elle-même dans son état initial lors de la détection d'une valeur seuil de tension continue inférieure prédéfinie.

2. Ballast électronique selon la revendication 1, caractérisé en ce que l'interrupteur à semi-conducteur est exécuté en tant que transistor de puissance FET (V1).

3. Ballast électronique selon la revendication 1, caractérisé en ce que l'interrupteur à semi-conducteur est exécuté en tant que transistor bipolaire à grille isolée (IGBT) (V4).

4. Ballast électronique selon l'une des revendications 1 à 3, caractérisé en ce que le circuit de commande (R2, R3, R4, C2 resp. R21, C21, R31, R41) de l'interrupteur à semi-conducteur (V1 resp. V4) comprend un montage en série de deux résistances ohmiques supplémentaires (R3, R4 resp. R31, R41) branché en parallèle avec le premier condensateur (C2), et en ce que le circuit de seuil (V2, D1, R5, R6 et V3, R7 resp. V21, R8, D2, R10 et V31, R71) exécuté en tant que bascule avec hystérèse comprend un transistor bipolaire (V3 resp. V31) connecté avec son entrée de commande au point de jonction de ces résistances supplémentaires (R3, R4 resp. R31, R41) ainsi qu'un second transistor bipolaire (V2 resp. V21) dont le circuit de commutation est parallèle au premier condensateur (C2 resp. C21) et dont l'entrée de commande est couplée, par le biais du circuit de commutation dudit un transistor bipolaire (V3 resp. V31), d'une part à la sortie de tension continue du dispositif redresseur (2) fournissant le potentiel de tension continue bas (U-), et dont la branche de commande, qui est reliée d'autre part à la sortie de tension continue du dispositif redresseur fournissant le potentiel de tension continue haut (U+), contient une diode Zener (D1 resp. D2) branchée dans le sens de non-conduction et dont la tension de claquage est choisie de manière à correspondre à la valeur seuil de tension continue prédéfinie.

5. Ballast électronique selon la revendication 4, caractérisé en ce que la diode Zener (D1) est branchée en série avec deux résistances ohmiques supplémentaires (R5, R6) dans le circuit de commande du second transistor bipolaire (V2) et ce montage en série est branché en parallèle avec les bornes de tension continue du dispositif redresseur (2), et en ce que le point de jonction de ces résistances ohmiques supplémentaires (R5, R6) est relié à l'entrée de commande du second transistor bipolaire (V2) qui est relié d'autre part, par le biais du circuit de commutation dudit un transistor bipolaire (V2), à la borne de tension continue du dispositif redresseur (2) fournissant le potentiel de tension continue bas (U-).

6. Ballast électronique selon la revendication 4, caractérisé en ce qu'un montage en série de deux résistances ohmiques supplémentaires (R8, R9) est branché en parallèle avec les bornes de tension continue du dispositif redresseur (2), montage dont le point de jonction est, d'une part, relié à la borne de tension continue du dispositif redresseur (2) fournissant le potentiel de tension continue bas (U-), par le biais du circuit de commutation dudit un transistor bipolaire (V31) et, d'autre part, relié à l'entrée de commande de l'autre transistor bipolaire (V31), par le biais de la diode Zener (D2) fonctionnant dans le sens de non-conduction.

7. Ballast électronique selon la revendication 6, caractérisé en ce que le point de jonction de ces résistances ohmiques supplémentaires (R8, R9) est relié, par le biais d'un condensateur supplémentaire (C3), à la borne de tension continue du dispositif redresseur (2) fournissant le potentiel de tension continue bas (U-).

8. Ballast électronique selon l'une des revendications 1 à 7, caractérisé en ce que l'on prévoit un condensateur supplémentaire (C1 resp. C11) monté en parallèle avec les bornes de tension continue du dispositif redresseur (2).

9. Ballast électronique selon l'une des revendications 1 à 8, caractérisé en ce que l'on prévoit, en outre, un varistor (S1) monté en parallèle avec les bornes de tension continue du dispositif redresseur (2).

10. Ballast électronique selon l'une des revendications 1 à 9, caractérisé en ce que l'interrupteur de puissance (V1 resp. V4) est exécuté en tant que circuit de commutation intégré avec le réseau de commande exécuté en tant que circuit de limitation de courant resp. de protection contre les surtensions, qui lui est associé.

11. Ballast électronique selon la revendication 10, caractérisé en ce que le circuit de commutation intégré comprend, en outre, le dispositif redresseur (2).
